# NEUE EUROPÄISCHE PATENTSCHRIFT

(11) **EP 2 835 522 B2**
(45) Veröffentlichungstag und Bekanntmachung des Hinweises auf die Entscheidung über den Einspruch: **14.02.2024**
(45) Hinweis auf die Patenterteilung: 01.08.2018
(21) Anmeldenummer: 14179505.4
(22) Anmeldetag: 01.08.2014
(51) Int. Cl.: F02C 6/08, F02K 3/075, F04D 27/02, F02C 9/18

(54) **Vorrichtung und Verfahren zum Abblasen von Verdichterluft in einem Triebwerk**
Device and method for letting off compressor air in an engine
Dispositif et procédé de soufflage d'air comprimé dans une turbine

(30) Priorität: 05.08.2013 DE 102013215371
(43) Veröffentlichungstag der Anmeldung: 11.02.2015
(73) Patentinhaber: Rolls-Royce Deutschland Ltd & Co KG, 15827 Blankenfelde-Mahlow (DE)
(72) Erfinder: Siering, Jean-Marc, 12357 Berlin (DE)
(74) Vertreter: Maikowski & Ninnemann Patentanwälte Partnerschaft mbB

(56) Entgegenhaltungen:
- WO-A1-2008/045070
- US-A- 5 044 153
- US-A- 5 119 625
- US-A1- 2008 063 515

## Beschreibung

Die Erfindung betrifft ein Triebwerk mit einem Bypass-Kanal und einer Vorrichtung zum Abblasen von Verdichterluft und ein Verfahren zum Abblasen von Verdichterluft in einem Triebwerk.

Es ist bekannt, aus einem Verdichter eines Triebwerks Verdichterluft zu entnehmen, um den Massenstrom durch den Verdichter zu variieren und diesen hinsichtlich seiner aerodynamischen Stabilität zu optimieren. Das Abblasen von Verdichterluft dient beispielsweise dazu, instabile Betriebszustände eines Niederdruckverdichters zu unterbinden.

Aus der US 7 594 403 B2 ist eine Vorrichtung zur Entnahme von Verdichterluft aus einem Niederdruckverdichter bekannt, bei der in der Wandung des Niederdruckverdichters Öffnungen ausgebildet sind, welche durch einen außen anliegenden Verstellring freigegeben oder verschlossen werden können. Die entnommene Verdichterluft wird über Bypass-Kanäle einem Sekundärstromkanal zugeführt. Eine solche Vorrichtung zum regelbaren Abblasen von Verdichterluft aus einem Niederdruckverdichter wird auch als BBV-System (BBV = "Booster Bleed Valve") bezeichnet.

Aus der US 2002/0148216 A1 ist ein Turbofan-Triebwerk bekannt, bei dem hinter einem Niederdruckverdichter Öffnungen in der Wandung des Primärstromkanals ausgebildet sind, über die Verdichterluft in einen ringförmigen Hohlraum geleitet wird. Von dem Hohlraum führt eine Mehrzahl von Kanälen zu einem Sekundärstromkanal des Triebwerks. Diesen Kanälen ist jeweils ein Ventil zum Öffnen oder Schließen des jeweiligen Kanals zugeordnet.

In bekannten BBV-Systemen können z.B. durch Ventilringe oder Ventilklappen nur die Positionen "offen" und "geschlossen" bedient werden, da in den Übergangsstellungen die Luft zu stark verwirbelt. Dies ist mit dem Nachteil verbunden, dass es nicht möglich ist, eine definierte Einstellung des Luftstroms vorzunehmen, der durch den Bypass-Kanal geleitet wird. Denn bei einer nur teilweisen Freigabe der Öffnungen entstehen bei den bekannten BBV-Systemen in hohem Maße Verwirbelungen, die zu einem Effizienzverlust und einem Lärmzuwachs führen.

Aus der US 2008/0063515 A1 ist eine Vorrichtung zum Abblasen von Verdichterluft in einem Triebwerk bekannt, die ein Verschließelement in Form eines verschiebbaren Ventils umfasst. Mittels des Verschließelementes ist ein Bypass-Kanal zwischen einem Primärstromkanal und einem Sekundärstromkanal eines Triebwerks verschließbar. Das Verschließelement bzw. Ventil kann dabei eine vollständig geschlossene Position einnehmen, in der der Bypass-Kanal vollständig geschlossen ist, kann teilweise geöffnet sein, oder vollständig geöffnet sein. Im letzten Fall wird das Gas des Bypass-Kanals über eine Öffnung in den Sekundärstromkanal geleitet, während das Gas bei der geschlossenen Ventilstellung in den Sekundärstromkanal geleitet wird. An das Ventil schließen sich stromabwärts Luftleitflächen an, die fest mit dem verschiebbaren Ventil verbunden sind.

Der vorliegenden Erfindung liegt die Aufgabe zugrunde, ein Triebwerk mit einem Bypass-Kanal und einer Vorrichtung zum Abblasen von Verdichterluft und ein Verfahren zum Abblasen von Verdichterluft in einem Triebwerk bereitzustellen, die ohne oder mit nur geringem Effizienzverlust eine definierte Einstellung des Luftstroms ermöglichen, der durch einen Bypass-Kanal für abzublasende Verdichterluft geleitet wird.

Danach zeichnet sich die erfindungsgemäße Lösung durch ein Verschließelement aus, das dazu ausgebildet ist, sukzessive in den Bypass-Kanal verschoben zu werden. Dabei ist der durch den Bypass-Kanal strömende Luftstrom durch die Position des Verschließelementes einstellbar. Des Weiteren ist eine mit dem Verschließelement gekoppelte Luftleiteinrichtung vorgesehen, die Luftleitflächen aufweist, die sich stromabwärts an das Verschließelement anschließen, wobei die räumliche Ausrichtung der Luftleitflächen abhängig von der Position des Verschließelements eingestellt wird.

Die erfindungsgemäße Lösung ermöglicht eine definierte Einstellung des Luftstroms, der durch den Bypass-Kanal geleitet und abgeblasen wird. Dabei kann der Luftstrom im Wesentlichen stufenlos eingestellt werden, wobei auch Betriebssituationen realisierbar sind, in denen permanent ein definierter Massenstrom aus dem Verdichter abgeblasen wird, um die Effizienz des Verdichters zu optimieren.

Gleichzeitig wird durch die Bereitstellung einer Luftleiteinrichtung mit Luftleitflächen im Bypass-Kanal sichergestellt, dass eine Verwirbelung des Gasstroms hinter dem Verschließelement verhindert oder reduziert wird und stattdessen die Strömung mit hoher Laminarität auch hinter dem Verschließelement im Bypass-Kanal strömt. Hierzu schließen sich die Luftleitflächen beispielsweise an eine stirnseitige Kante des in den Bypass-Kanal ragenden Verschließelementes stromabwärts an.

Dadurch, dass die räumliche Ausrichtung der Luftleitflächen abhängig ist von der Position des Verschließelementes, kann sichergestellt werden, dass zu jeder Position des Verschließelementes, d. h. bei jedem Öffnungsgrad des Bypass-Kanals, eine möglichst hohe Laminarität der Strömung hinter dem den Bypass-Kanal teilweise verschließenden Verschließelement vorliegt.

Es wird darauf hingewiesen, dass das Merkmal, dass die räumliche Ausrichtung der Luftleitflächen abhängig ist von der Position des Verschließelementes, bedeutet, dass ein Normalenvektor, der auf einer Luftleitfläche steht, in Abhängigkeit von der Position des Verschließelements seine Orientierung im Raum ändert. Ein solcher Normalenvektor wird mit anderen Worten in Abhängigkeit von der Position des Verschließelements hinsichtlich seiner Raumrichtung verändert. Eine Änderung der räumlichen Ausrichtung liegt beispielsweise nicht vor, wenn eine Luftleitfläche lediglich in einer Raumrichtung parallelverschoben wird. Für diesen Fall wird lediglich der Startpunkt des Normalenvektors verschoben, ohne dass sich seine Richtung im Raum ändert.

Gemäß der vorliegenden Erfindung ist das Verschließelement durch einen axial verschiebbaren Ring oder ein axial verschiebbares Ringsegment gebildet. Der Bypass-Kanal ist dabei rotationssymmetrisch ausgebildet. Durch das axiale Verschieben des Rings oder ein oder mehrerer Ringsegmente wird der Bypass-Kanal sukzessive verschlossen.

Eine Ausgestaltung der Erfindung sieht vor, dass die Luftleiteinrichtung durch eine Mehrzahl von Klappen gebildet ist. Die Klappen sind dabei jeweils beweglich zum Verschließelement ausgebildet, wobei jede der Klappen eine Luftleitfläche ausbildet. Zwischen den Klappen befindet sich in Umfangsrichtung ein Spalt, der klein bemessen sein kann. Durch die Bereitstellung einer Mehrzahl von Klappen wird sichergestellt, dass diese abhängig von der Position des Verschließelementes ihre räumliche Ausrichtung verändern können. So ist vorgesehen, dass der Neigungswinkel der Klappen abhängig ist von der Position des Verschließelementes.

Gemäß einer Ausführungsvariante ist zur Kopplung der Klappen mit dem Verschließelement vorgesehen, dass jede der Klappen über mindestens ein Gelenk mit dem Verschließelement verbunden ist. Hierdurch wird bei einer Änderung der Position des Verschließelementes automatisch auch die räumliche Ausrichtung der Klappen geändert und angepasst. Weiter ist gemäß einer Ausführungsvariante vorgesehen, dass jede der Klappen zusätzlich über ein weiteres Gelenk mit einem ortsfesten Ankerpunkt verbunden ist. Ein solcher ortsfester Ankerpunkt kann beispielsweise durch ein strukturelle Lasten aufnehmendes Zwischengehäuse (auch als IMC = "Intermediate Casing" bezeichnet) bereitgestellt werden.

Gemäß einer bevorzugten Ausgestaltung erfährt die räumliche Ausrichtung der Luftleitflächen in Abhängigkeit von der Position des Verschließelementes eine Änderung derart, dass für jede Position des Verschließelementes die durch die Luftleitflächen bereitgestellte Erhöhung der Laminarität der Strömung maximal ist. Beispielsweise wird zunächst berechnet, wie die Luftleitflächen bei bestimmten Positionen des Verschließelementes ausgerichtet sein sollten, um einen möglichst hohen Grad an Laminarität der Strömung zu erreichen, und wird die Kopplung zwischen Luftleiteinrichtung und Verschließelement dann derart ausgebildet (z. B. durch entsprechend positionierte Gelenke), dass eine optimale räumliche Ausrichtung der Luftleitflächen bei jeder Position des Verschließelementes realisiert ist.

Gemäß einem alternativen Ausführungsbeispiel ist die Luftleiteinrichtung nicht durch eine Mehrzahl von Klappen gebildet, sondern durch ein biegsames, flächig ausgebildetes Element. Dieses bildet zwei Endbereiche aus, wobei der eine Endbereich in einem Randbereich des Verschließelementes mit diesem verbunden ist und der andere Endbereich stromabwärts dazu ortsfest an einer Begrenzungsstruktur des Bypass-Kanals angeordnet ist. Durch eine solche Anordnung des Elementes und aufgrund seiner biegsamen Eigenschaften wird auch bei dieser Ausführungsvariante sichergestellt, dass die räumliche Ausrichtung der Luftleitflächen abhängig ist von der Position des Verschließelements. Das flächig ausgebildete Element ist dabei beispielsweise durch ein Blech gebildet. Es kann als Ring oder als Ringsegment ausgebildet sein.

Die erfindungsgemäße Vorrichtung kann unter anderem dazu ausgebildet sein, einen Betriebszustand zu realisieren, bei dem das Verschließelement eine Position derart einnimmt, dass 30 % bis 80 %, insbesondere 40 % bis 70% des maximal durch den Bypass-Kanal abblasbaren Massenstroms permanent durch den Bypass-Kanal strömen. Durch die Bereitstellung eines kontinuierlichen Massenstroms kann die Effizienz des Verdichters in Ausführungsbeispielen optimal eingestellt werden.

Die Realisierung einer Verschiebbarkeit des Verschließelementes kann auf vielfältige Weise erfolgen. Beispielsweise kann das Verschließelement (das wie erwähnt beispielsweise als Ring oder als Ringsegment ausgeführt ist) über einen Exzenter mit einem Aktuator gekoppelt sein. Eine Verschiebbarkeit kann jedoch auch in anderer Weise, beispielsweise über ein Schaftsystem oder unter Verwendung von Hebeln und Gelenkstangen erfolgen.

Die erfindungsgemäße Lösung wird beispielsweise in einem Niederdruckverdichter eines Turbofan-Triebwerks eingesetzt. Ein Abblasen von Verdichterluft erfolgt dabei typischerweise bei niedrigen Drehzahlen oder bei transienten Vorgangen. Die Erfindung kann jedoch grundsätzlich auch bei einem anderen Verdichter eines Triebwerks realisiert werden, beispielsweise zum Abblasen von Verdichterluft eines Hochdruckverdichters eines Kerntriebwerks.

Die Erfindung betrifft auch ein Verfahren zum Abblasen von Verdichterluft in einem Triebwerk, wobei die abzulassende Verdichterluft aus einem Verdichter des Triebwerks in einen Bypass-Kanal geleitet wird. Dabei ist vorgesehen, dass über den Bypass-Kanal während des Betriebs des Triebwerks Luft abgelassen wird, indem ein verschiebbares Verschließelement derart in den Bypass-Kanal geschoben wird, dass dieser nur teilweise verschlossen ist. Dabei wird die im Bypass-Kanal strömende Verdichterluft stromabwärts des Verschließelements zur Erhöhung der Laminarität der Strömung an Luftleitflächen einer mit dem Verschließelement gekoppelten Luftleiteinrichtung vorbeigeführt und die räumliche Ausrichtung der Luftleitflächen wird in Abhängigkeit von der Position des Verschließelements eingestellt.

Die Erfindung wird nachfolgend unter Bezugnahme auf die Figuren der Zeichnung anhand mehrerer Ausführungsbeispiele näher erläutert. Es zeigen:
- Figur 1: Komponenten eines Ausführungbeispiels eines Turbofan-Triebwerks unter Darstellung eines Fans, eines Primärstromkanals, eines Sekundärstromkanals, eines Niederdruckverdichters und eines flexibel verschließbaren Bypass-Kanals, durch den Luft vom Niederdruckverdichter in den Sekundärstromkanal leitbar ist;
- Figur 2: in vergrößerter Ansicht den Bypass-Kanal der Figur 1, wobei dem Bypass-Kanal eine Vorrichtung zum Abblasen von Verdichterluft mit einem axial verschiebbaren Verschließelement zugeordnet ist;
- Figur 3: den Bypass-Kanal der Figur 2 unter Darstellung einer ersten Position des Verschließelements;
- Figur 4: den Bypass-Kanal der Figur 2 unter Darstellung einer zweiten Position des Verschließelements;
- Figur 5: den Bypass-Kanal der Figur 2 unter Darstellung einer dritten Position des Verschließelements; und
- Figur 6: ein zweites Ausführungsbeispiel einer Vorrichtung zum Abblasen von Verdichterluft, die einen Bypass-Kanal in definierter Weise verschließt.

Die Figur 7 zeigt Komponenten eines Turbofan-Triebwerks. Der dargestellte Ausschnitt eines Turbofan-Triebwerks umfasst eine Fanstufe mit einem Fan 1, von dem die durch den Fan 1 angesaugte Luftmasse zum einen in einen Sekundärstromkanal 2 und zum anderen in einen Primärstromkanal 3 geleitet wird. Der Sekundärstromkanal 2 und der Primärstromkanal 3 werden dabei hinter dem Fan 1 durch einen Splitter 4 voneinander getrennt. Der Primärstromkanal 3 führt durch das Kerntriebwerk. Das Kerntriebwerk umfasst im Falle eines zweiwelligen Triebwerks einen Niederdruckverdichter 6, einen Hochdruckverdichter, eine Brennkammer, eine Hochdruckturbine und eine Niederdruckturbine.

Im Kontext der vorliegenden Erfindung ist das Abblasen von Verdichterluft des Niederdruckverdichters 6 von Bedeutung. Es wird jedoch darauf hingewiesen, dass die Prinzipien der Erfindung, die nachfolgend anhand des Abblasens von Verdichterluft eines Niederdruckverdichters erläutert werden, in gleicher Weise auch für das Abblasen von Verdichterluft z.B. eines Hochdruckverdichters oder eines Mitteldruckverdichters (bei einem dreiwelligen Triebwerk) eingesetzt werden können.

Der Niederdruckverdichter 6 umfasst mehrere, im dargestellten Ausführungsbeispiel zwei Verdichterstufen, die auch als Booster-Stufen bezeichnet werden. Vor dem Niederdruckverdichter 6 ist dem Primärstromkanal 3 eingangs ein Leitrad 5 angeordnet, das dazu dient, den Drall aus dem Luftstrom zu nehmen, den dieser im nabennahen Bereich des Fans 1 erhalten hat.

Der Niederdruckverdichter 6 ist von einem Umfangsgehäuse 8 umgeben, das den Primärstromkanal 3 radial außen begrenzt. Radial innen ist der Primärstromkanal 3 durch entsprechende Kranzoberflächen der Rotoren und Statoren bzw. durch die Nabe oder durch mit der Nabe verbundene Elemente der entsprechenden Antriebswelle gebildet.

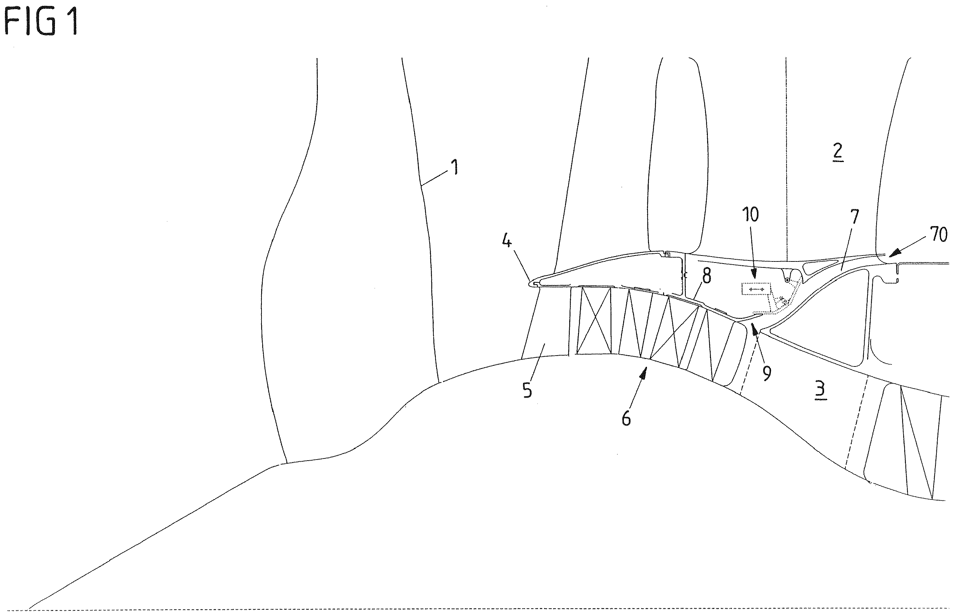

In Strömungsrichtung hinter dem Niederdruckverdichter 6 weist das Umfangsgehäuse 8 eine Öffnung 9 auf, die sich zu einem Bypass-Kanal 7 öffnet. Der Bypass-Kanal 7 dient dem Abblasen von Verdichterluft des Niederdruckverdichters 6. Der Bypass-Kanal 6 bläst die Verdichterluft in den Sekundärstromkanal 2 aus und weist dementsprechend an seinem hinteren Ende 70 eine Öffnung zum Sekundärstromkanal 2 auf oder alternativ zu Strukturen, die ihrerseits mit dem Sekundärstromkanal 2 verbunden sind. Der Verlauf des Bypass-Kanals 7 ist dabei in der Figur 1 nur beispielhaft dargestellt.

Die Öffnung 9 im Primärstromkanal 3 zum Bypass-Kanal 7 kann umlaufend ausgebildet sein oder durch eine Mehrzahl von gleichmäßig auf dem Umfang verteilten Öffnungen bestehen. Der Bypass-Kanal 7 kann rotationssymmetrisch ausgebildet sein, wobei er jedoch durch strukturelle Elemente beispielsweise eines strukturelle Lasten aufnehmenden Zwischengehäuses (IMC) unterbrochen sein kann.

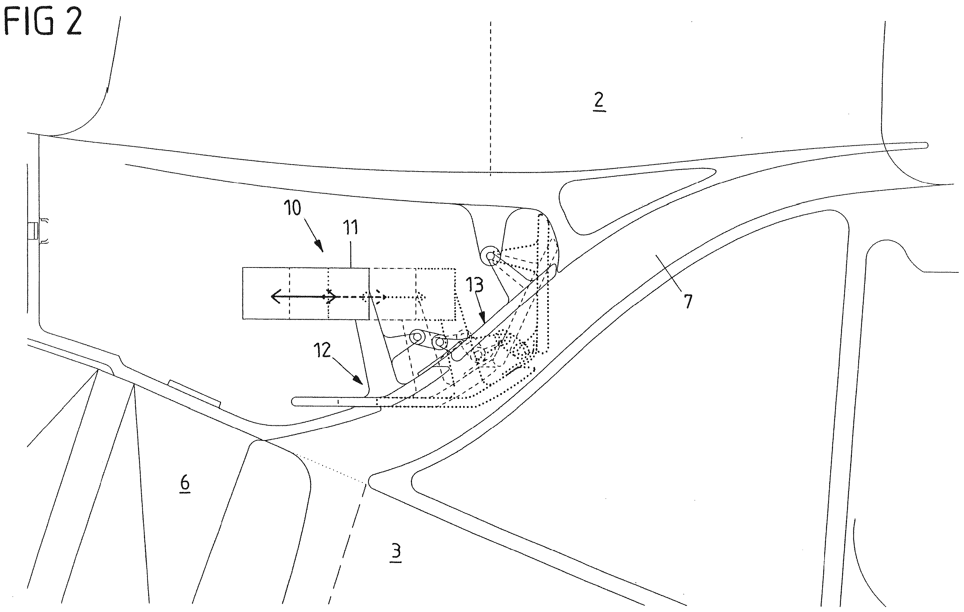

Dem Bypass-Kanal 7 ist eine Vorrichtung 10 zugeordnet, die ein Abblasen von Verdichterluft durch den Bypass-Kanal 7 in definierter Weise einstellt. Diese Vorrichtung 10 wird nachfolgend anhand der Figuren 2 bis 5 näher erläutert.

Gemäß der Figur 2 umfasst die Vorrichtung 10 einen Aktuator 11, ein Verschließelement 12 und eine Luftleiteinrichtung 13. Der Aktuator 11 ist in axialer Richtung verschiebbar, wie durch den Doppelpfeil schematisch dargestellt ist. Das Verschließelement 12 ist derart mit dem Aktuator 10 gekoppelt, dass es sukzessive in den Bypass-Kanal 7 verschiebbar ist, wobei der durch den Bypass-Kanal 7 strömende Luftstrom durch die Position des Verschließelementes 12 einstellbar ist. Die Luftleiteinrichtung 13 ist mit dem Verschließelement 12 mechanisch gekoppelt. Sie umfasst Luftleitflächen, die sich im Bypass-Kanal 7 an eine Kante des in den Bypass-Kanal ragenden Verschließelementes 12 stromabwärts anschließen.

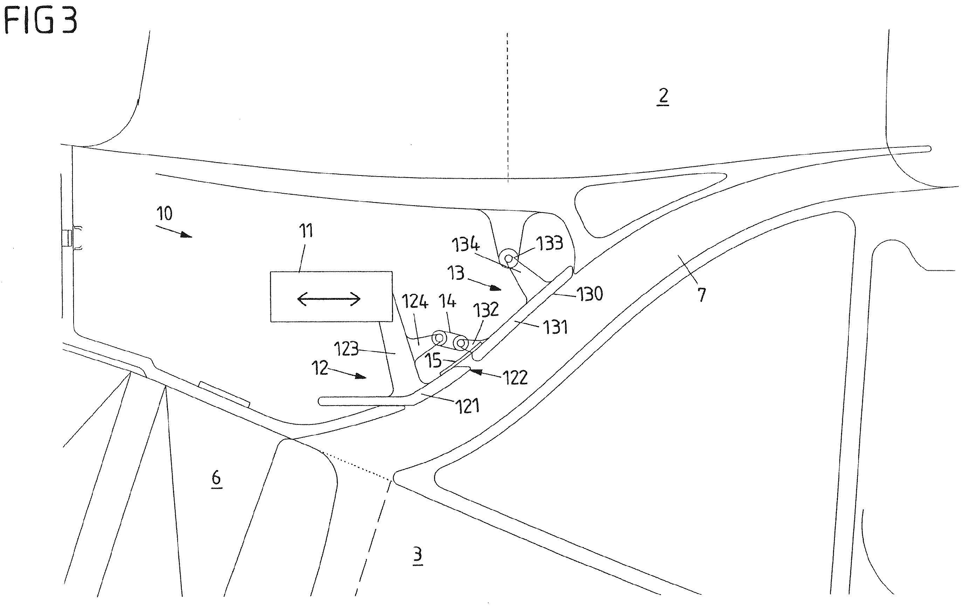

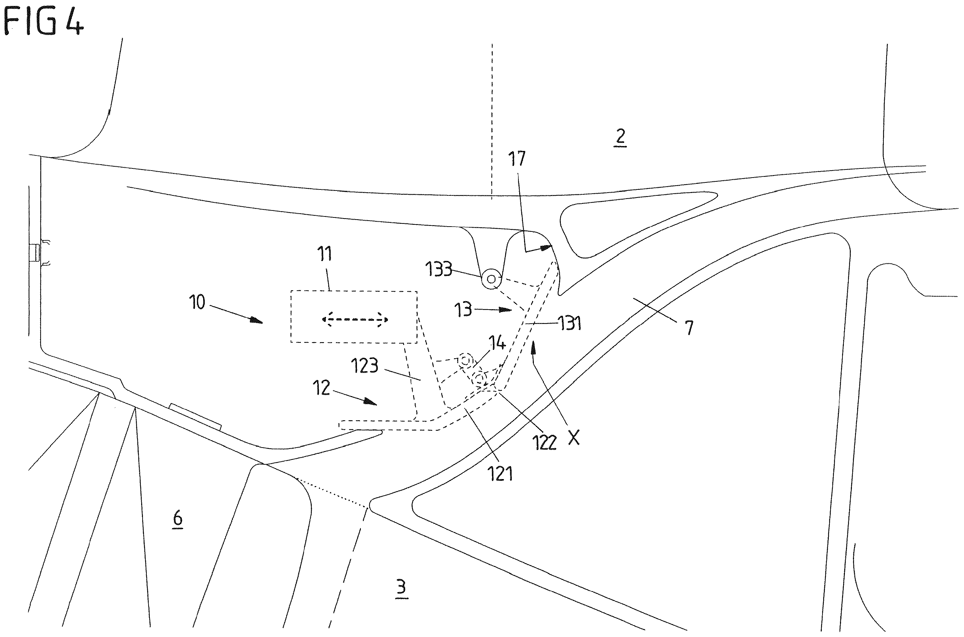

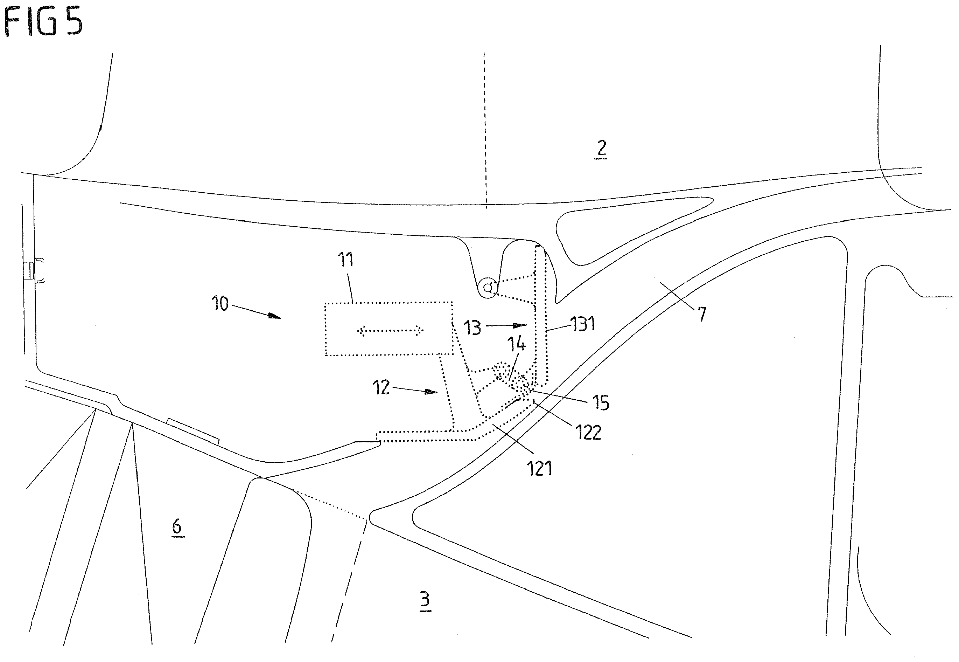

Die Figur 2 zeigt in einer Darstellung drei der möglichen Positionen des Aktuators 11, des Verschließelementes 12 und der Luftleiteinrichtung 13. Die Figur 3 entspricht dabei der ersten Position, die Figur 4 entspricht der zweiten Position und die Figur 5 entspricht der dritten Position. Eine genaue Erörterung der Struktur des Verschließelementes 12 und der Luftleiteinrichtung 13 erfolgt anhand der Figuren 3 bis 5, da diese aufgrund der Darstellung nur einer Position jeweils übersichtlicher sind.

Das Verschließelement 12 umfasst eine Verschließfläche 121, die in der offenen Position der Vorrichtung, d. h. bei vollständig geöffnetem Bypass-Kanal 7 an der Umfangswand des Bypass-Kanals 7 anliegt oder diese ausbildet. Die Verschließfläche 121 bildet an ihrem in Strömungsrichtung hinteren Ende eine Kante 122 aus, die bei axialem Verschieben des Verschließelementes 12 mittels des Aktuators 11 am weitesten in den Bypass-Kanal 7 ragt, vgl. Figur 4.

Das Verschließelement 12 umfasst des Weiteren einen Befestigungsarm 123, der starr mit dem Aktuator 11 gekoppelt ist, so dass durch axiales Verschieben des Aktuators 11 die Verschließfläche 121 in axialer Richtung in den Bypass-Kanal 7 geschoben wird.

Die axial verschiebbare Verschließfläche 121 ist als Ring oder als Ringsegment ausgebildet, so dass bei Verschieben der Verschließfläche 121 in den Bypass-Kanal 7, der rotationssymmetrisch ausgebildet ist, dieser insgesamt in seinem Querschnitt reduziert oder vollständig verschlossen wird.

Die Luftleiteinrichtung 13 besteht aus einer Mehrzahl von im Umfangsrichtung benachbarter Klappen 130, die jeweils zum Bypass-Kanal 7 eine Luftleitfläche 131 bilden. Die Klappen 139 sind zum einen über einen Arm 134 mit einem ortsfesten Gelenk 133 verbunden. Sie sind zum anderen über einen Arm 132 mit einem nicht ortsfesten Doppelgelenk 14 verbunden, das neben der Verbindung zu dem Arm 132 eine Verbindung zu einem Arm 124 aufweist, der von dem Befestigungsarm 123 absteht. Hierdurch wird eine Kopplung der Luftleiteinrichtung 13 mit dem Verschließelement 12 bereitgestellt und zwar derart, dass die räumliche Ausrichtung der Klappen 130 und der durch diese bereitgestellten Luftleitflächen 131 abhängig ist von der axialen Position des Verschließelementes 12.

Des Weiteren ist vorgesehen, dass die Verschließfläche 121 des Verschließelements 12 und die Luftleitfläche 131 der Klappen 130 an ihren einander angrenzenden Enden, d. h., im Bereich der Kante 122 des Verschließelementes 12, auf der dem Bypass-Kanal 7 abgewandten Seite durch ein Element 15 miteinander verbunden sind. Bei diesem Element 15 handelt es sich beispielsweise um ein biegbares Blech oder dergleichen. Dieses biegbare Element 15 stärkt die Struktur der Vorrichtung im Übergangsbereich zwischen der Verschließfläche 121 und der Luftleitfläche 131 und verhindert zusätzlich, dass durch den Spalt zwischen der Verschließfläche 121 und der Luftleitfläche 131 Luft strömen kann.

Die Figur 4 zeigt die Vorrichtung der Figur 3 in einem Zustand, in dem das Verschließelement 12 gegenüber dem Zustand der Figur 3 axial in den Bypass-Kanal 7 verschoben wurde, ohne diesen dabei zu verschließen. Dabei ist zu erkennen, dass aufgrund der Kopplung zwischen der Luftleiteinrichtung 13 und dem Verschließelement 12 über das Doppelgelenk 14 die axiale Position des Verschließelementes 12 die räumliche Ausrichtung der Luftleitflächen 131 der Luftleiteinrichtung 13 definiert. Die räumliche Ausrichtung der Luftleitflächen 131 ändert sich aufgrund dieser Kopplung fließend abhängig von der axialen Position des Verschließelementes 12.

Dabei ist in Strukturkomponenten des Triebwerks eine Bogenfläche 17 realisiert, die es erlaubt, dass das dem Verschließelement 12 abgewandte Ende der Luftleitfläche 131 eine durch das Lager 133 definierte Bewegung durchführen kann. Über Art und Abmessungen des Doppelgelenks 14 sowie die räumliche Position des ortsfesten Gelenks 133 kann dabei der Ablauf der räumlichen Orientierung der Luftleitfläche 131 bei Verschieben des Verschließelementes 12 in gewünschter Weise definiert werden.

Dabei ist vorgesehen, dass die Luftleitfläche 131 bei jeder axialen Position des Verschließelementes 12 eine räumliche Ausrichtung derart besitzt, dass die Laminarität der durch den Bypass-Kanal 7 strömenden Abblasluft hinter dem Verschließelement 12, insbesondere hinter dessen stirnseitiger Kante 122 hoch oder maximal ist, d. h. eine Verwirbelung hinter dem Verschließelement 12 im Bypass-Kanal 7 möglichst gering wird. Eine solche Verwirbelung ist nachteilig mit einem Effizienzverlust und einem Lärmzuwachs verbunden.

So wird durch die Bereitstellung von Luftleitflächen 131 in Strömungsrichtung hinter dem Verschließelement 12, und insbesondere hinter der Kante 122 des Verschließelementes 12 erreicht, dass die Strömung im Bypass-Kanal 7 hinter der Kante 122 nicht verwirbelt, sondern insbesondere in dem in der Figur 4 dargestellten Bereich X weitgehend laminar entlang der Luftleitflächen 131 geführt wird. Die Luftleitflächen 131 bewirken dabei ausgehend von der durch das Verschließelement 12 bereitgestellten Verengung des Bypass-Kanals 7 eine kontinuierliche Erweiterung des Bypass-Kanals, bis eine bestimmte Breite erreicht ist.

Die Figur 5 zeigt die Vorrichtung der Figur 3 mit einer Position des Verschließelementes, in der dieses den Bypass-Kanal 7 weitgehend verschließt. Die räumliche Ausrichtung der Luftleitflächen 131 ist automatisch an die neue axiale Position des Verschließelementes 2 angepasst. Das biegsame Element 15 stellt eine sichere strukturelle Verbindung zwischen der Verschließfläche 121 und der Luftleitfläche 131 bereit.

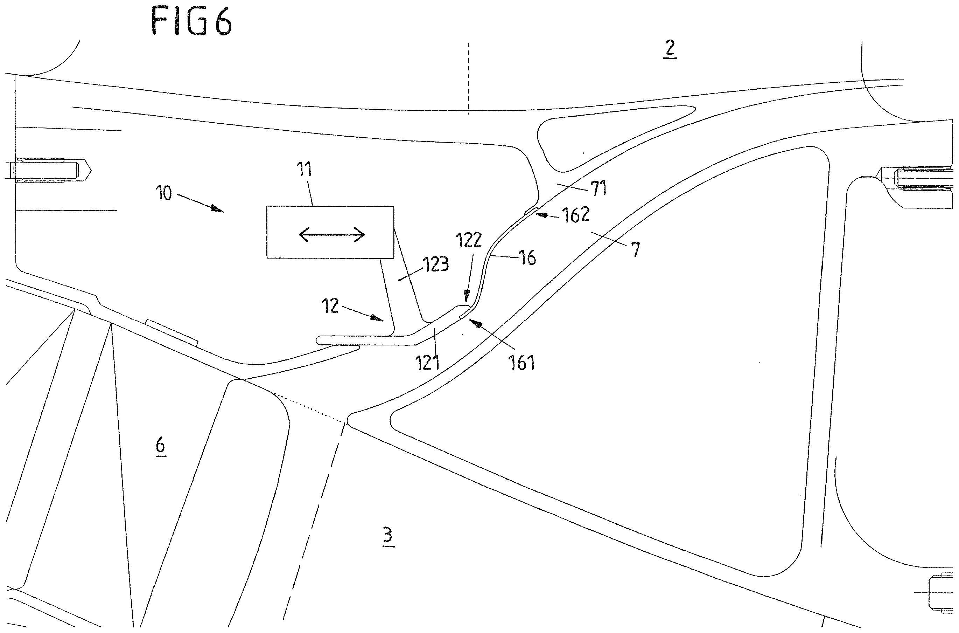

Die Figur 6 zeigt ein alternatives Ausführungsbeispiel der Erfindung. Bei diesem Ausführungsbeispiel ist die Luftleiteinrichtung durch ein biegsames, flächig ausgebildetes Element 16 gebildet, das beispielsweise durch ein biegsames Blech bereitgestellt wird. Das biegsame Element 16 bildet zwei Endbereiche 161, 162 aus, wobei der eine Endbereich 161 im Bereich der Kante 122 des Verschließelementes 12 und der andere Endbereich stromabwärts dazu ortsfest an einer Begrenzungsstruktur 71 des Bypass-Kanals 7 befestigt ist. Das biegsame Element 16 bildet an seiner dem Bypass-Kanal 7 zugewandten Seite Luftleitflächen aus, die eine Verwirbelung des Luftstroms hinter der Kante 122 des Verschließelementes 12 verhindern oder verringern. Gleichzeitig wird durch die flexible Ausbildung des Elementes 16 erreicht, dass die räumliche Ausrichtung der durch das Element 16 bereitgestellten Luftleitflächen abhängig ist von der Position des Verschließelementes 12, und dementsprechend bei jeder Position des Verschließelementes 12 eine verbesserte Laminarität der Strömung im Bypass-Kanal 7 vorliegt.

Die in den Figuren beschriebenen Vorrichtungen ermöglichen, dass über den Bypass-Kanal 7 während des Betriebs des Triebwerks fortlaufend Luft abgelassen wird, da das Verschließelement 12 derart positionierbar ist, dass es den Bypass-Kanal 7 nur teilweise verschließt. Dabei wird die im Bypass-Kanal 7 strömende Verdichterluft hinter dem Verschließelement 12 zur Erhöhung der Laminarität der Strömung an Luftleitflächen vorbeigeführt, die sich im Bypass-Kanal 7 an das Verschließelement 12 stromabwärts unmittelbar anschließen.

Die Erfindung beschränkt sich in ihrer Ausgestaltung nicht auf die vorstehend dargestellten Ausführungsbeispiele, die nur beispielhaft zu verstehen sind. Insbesondere sind Struktur und Formgebung des Verschließelementes und der Luftleiteinrichtung nur beispielhaft zu verstehen.

## Patentansprüche

1. Turbofan-Triebwerk mit einem Bypass-Kanal (7) und einer Vorrichtung zum Abblasen von Verdichterluft in dem Triebwerk, wobei die Vorrichtung mindestens einen Aktuator (11) und mindestens ein mit dem Aktuator (11) gekoppeltes Verschließelement (12) zum Verschließen oder teilweisen Verschließen des Bypass-Kanals (7) aufweist, über den Verdichterluft abblasbar ist, wobei das Verschließelement (12) dazu ausgebildet ist, sukzessive in den Bypass-Kanal (7) verschoben zu werden, wobei der durch den Bypass-Kanal (7) strömende Luftstrom durch die Position des Verschließelements (12) einstellbar ist,
**dadurch gekennzeichnet, dass**
- eine mit dem Verschließelement (12) gekoppelte Luftleiteinrichtung (13, 16) vorgesehen ist, die Luftleitflächen (131) aufweist, die sich stromabwärts an das Verschließelement (12) anschließen, wobei die räumliche Ausrichtung der Luftleitflächen (131) abhängig von der Position des Verschließelements (12) eingestellt wird, wobei das Verschließelement (12) durch einen axial verschiebbaren Ring oder ein axial verschiebbares Ringsegment gebildet ist und der Bypass-Kanal (7) rotationssymmetrisch ausgebildet ist.

2. Turbofan-Triebwerk nach Anspruch 1, **dadurch gekennzeichnet, dass** die Luftleitflächen (131) sich derart an das in den Bypass-Kanal (7) ragende Verschließelement (12) anschließen, dass die Laminarität der Strömung hinter dem Verschließelement (12) erhöht ist.

3. Turbofan-Triebwerk nach Anspruch 1 oder 2, **dadurch gekennzeichnet, dass** die Luftleitflächen (131) sich im Bypass-Kanal (7) an eine Kante (122) des in den Bypass-Kanal (7) ragenden Verschließelements (12, 121) stromabwärts anschließen.

4. Turbofan-Triebwerk nach einem der vorangehenden Ansprüche, **dadurch gekennzeichnet, dass** das Verschließelement (12) durch einen axial verschiebbaren Ring oder ein axial verschiebbares Ringsegment gebildet ist.

5. Turbofan-Triebwerk nach einem der vorangehenden Ansprüche, **dadurch gekennzeichnet, dass** die Luftleiteinrichtung (13) durch eine Mehrzahl von Klappen (130) gebildet ist, die jeweils beweglich zum Verschließelement (12) ausgebildet sind, wobei jede der Klappen (130) eine Luftleitfläche (131) ausbildet.

6. Turbofan-Triebwerk nach Anspruch 5, **dadurch gekennzeichnet, dass** der Neigungswinkel der Klappen (131) abhängig ist von der Position des Verschließelements (12).

7. Turbofan-Triebwerk nach Anspruch 5 oder 6, **dadurch gekennzeichnet, dass** jede der Klappen (130) über ein Gelenk (14) mit dem Verschließelement (12) verbunden ist.

8. Turbofan-Triebwerk nach einem der Ansprüche 5 bis 7, **dadurch gekennzeichnet, dass** eine Verschließfläche (121) des Verschließelements (12) und eine Klappe (130) der Luftleiteinrichtung (13) mittels eines biegsamen Elements (15) im Bereich ihrer aneinander angrenzenden Kanten (122) miteinander verbunden sind.

9. Turbofan-Triebwerk nach einem der vorangehenden Ansprüche, **dadurch gekennzeichnet, dass** die räumliche Ausrichtung der Luftleitflächen (131) in Abhängigkeit von der Position des Verschließelements (12) eine Änderung derart erfährt, dass für jede Position des Verschließelements (12) die durch die Luftleitflächen (131) bereitgestellte Erhöhung der Laminarität der Strömung maximal ist.

10. Turbofan-Triebwerk nach einem der Ansprüche 1 bis 4, **dadurch gekennzeichnet, dass** die Luftleiteinrichtung (16) durch ein biegsames, flächig ausgebildetes Element gebildet ist, dass zwei Endbereiche (161, 162) ausbildet, wobei der eine Endbereich (161) in einem Randbereich des Verschließelements (12) mit diesem verbunden ist und der andere Endbereich (162) stromabwärts dazu ortsfest an einer Begrenzungsstruktur (71) des Bypass-Kanals (7) angeordnet ist.

11. Turbofan-Triebwerk nach einem der vorangehenden Ansprüche, **dadurch gekennzeichnet, dass** die Luftleitflächen (131) der Luftleiteinrichtung (13, 16) derart räumlich ausgerichtet sind, dass sich die Breite des Bypass-Kanals (7) hinter dem Verschließelement (12) kontinuierlich bis zu einer definierten Breite vergrößert.

12. Turbofan-Triebwerk nach einem der vorangehenden Ansprüche, **dadurch gekennzeichnet, dass** das Verschließelement (12) eine Position derart einnimmt, dass 30% bis 80%, insbesondere 40% bis 70% des maximal durch den Bypass-Kanal (7) abblasbaren Massenstroms durch den Bypass-Kanal (7) strömen.

13. Verfahren zum Abblasen von Verdichterluft in einem Turbofan-Triebwerk nach einem der Ansprüche 1 bis 12, bei dem abzulassende Verdichterluft aus einem Verdichter (6) des Turbofan-Triebwerks in einen Bypass-Kanal (7) geleitet wird, wobei über den Bypass-Kanal (7) während des Betriebs des Turbofan-Triebwerks Luft abgelassen wird, indem ein verschiebbares Verschließelement (12) derart in den Bypass-Kanal (7) geschoben wird, wobei dieser nur teilweise verschlossen ist,
**dadurch gekennzeichnet, dass**
die im Bypass-Kanal (7) strömende Verdichterluft stromabwärts des Verschließelements (12) zur Erhöhung der Laminarität der Strömung an Luftleitflächen (131) einer mit dem Verschließelement (12) gekoppelten Luftleiteinrichtung vorbeigeführt wird, und wobei die räumliche Ausrichtung der Luftleitflächen (131) in Abhängigkeit von der Position des Verschließelements (12) eingestellt wird.

## Claims

1. Turbofan engine having a bypass duct (7) and a device for bleeding compressor air in the engine, with the device being provided with at least one actuator (11) and at least one closing element (12) linked to the actuator (11) for closing or partially closing the bypass duct (7) via which compressor air can be bled off, wherein the closing element (12) is designed to be successively moved into the bypass duct (7), with the airflow passing through the bypass duct (7) being settable by the position of the closing element,
**characterized in that**
- an air guiding device (13, 16) linked to the closing element (12) is provided and has air guiding surfaces (131) which adjoin the closing element (12) downstream, with the spatial alignment of the air guiding surfaces (131) being adjusted depending on the position of the closing element (12), wherein the closing element (12) is formed by an axially displaceable ring or an axially displaceable ring segment and the bypass duct (7) is designed rotationally symmetrical.

2. Turbofan engine in accordance with Claim 1, **characterized in that** the air guiding surfaces (131) adjoin the closing element (12) protruding into the bypass duct (7) such that the laminarity of the flow behind the closing element (12) is increased.

3. Turbofan engine in accordance with Claim 1 or 2, **characterized in that** the air guiding surfaces (131) in the bypass duct (7) downstreamly adjoin an edge (122) of the closing element (12, 121) protruding into the bypass duct (7).

4. Turbofan engine in accordance with one of the preceding Claims, **characterized in that** the closing element (12) is formed by an axially displaceable ring or an axially displaceable ring segment.

5. Turbofan engine in accordance with one of the preceding Claims, **characterized in that** the air guiding device (13) is formed by a plurality of flaps (130) which in each case are designed movable relative to the closing element (12), with each of the flaps (130) forming an air guiding surface (131).

6. Turbofan engine in accordance with Claim 5, **characterized in that** the inclination angle of the flaps (131) is dependent on the position of the closing element (12).

7. Turbofan engine in accordance with Claim 5 or 6, **characterized in that** each of the flaps (130) is connected to the closing element (12) via a joint (14).

8. Turbofan engine in accordance with one of the Claims 5 to 7, **characterized in that** a closing surface (121) of the closing element (12) and a flap (130) of the air guiding device (13) are connected to one another by a flexible element (15) in the area of their edges (122) adjoining one another.

9. Turbofan engine in accordance with one of the preceding Claims, **characterized in that** the spatial alignment of the air guiding surfaces (131) undergoes a change, depending on the position of the closing element (12), such that for each position of the closing element (12) the increase in laminarity of the flow provided by the air guiding surfaces (131) is at its maximum.

10. Turbofan engine in accordance with one of the Claims 1 to 4, **characterized in that** the air guiding device (16) is formed by a flexible element of flat design, which forms two end areas (161, 162), with the one end area (161) being connected in a rim area of the closing element (12) to the latter and the other end area (162) being arranged downstream therefrom and stationary on a limiting structure (71) of the bypass duct (7).

11. Turbofan engine in accordance with one of the preceding Claims, **characterized in that** the air guiding surfaces (131) of the air guiding device (13, 16) are spatially aligned such that the width of the bypass duct (7) behind the closing element (12) is continuously increased up to a defined width.

12. Turbofan engine in accordance with one of the preceding Claims, **characterized in that** the closing element (12) assumes a position such that 30 % to 80 %, and in particular 40 % to 70%, of the maximum mass flow that can be bled off through the bypass duct (7) flow through said bypass duct (7).

13. Method for bleeding compressor air in an turbofan engine in accordance with one of the Claims 1 to 12, where the compressor air to be discharged is guided from a compressor (6) of the turbofan engine into a bypass duct (7), wherein during operation of the turbofan engine air is discharged via the bypass duct (7) by moving a displaceable closing element (12) into the bypass duct (7), wherein the latter is only partially closed,
**characterized in that**
the compressor air flowing in the bypass duct (7) downstream of the closing element (12) is routed past air guiding surfaces (131) of an air guiding device linked to the closing element (12), in order to increase the laminarity of the flow, and wherein the spatial alignment of the air guiding surfaces (131) is set depending on the position of the closing element (12).

## Revendications

1. Turboréacteur à soufflante avec un canal de flux secondaire (7) et un dispositif pour évacuer par soufflage l'air de compresseur dans le moteur, sachant que le dispositif présente au moins un actionneur (11) et au moins un élément d'obturation (12) accouplé à l'actionneur (11) pour obturer ou obturer partiellement le canal de flux secondaire (7) au moyen duquel l'air de compresseur est évacuable par soufflage, sachant que l'élément d'obturation (12) est conçu de manière à être déplacé successivement dans le canal de flux secondaire (7), sachant que le flux d'air s'écoulant dans le canal de flux secondaire (7) est réglable au moyen de la position de l'élément d'obturation (12),
**caractérisé en ce**
- **qu'**est prévu un dispositif de guidage d'air (13, 16) accouplé à l'élément d'obturation (12), lequel dispositif de guidage d'air présente des surfaces de guidage d'air (131) qui jouxtent en aval l'élément d'obturation (12), sachant que l'orientation spatiale des surfaces de guidage d'air (131) est réglée en fonction de la position de l'élément d'obturation (12), l'élément d'obturation (12) étant formé par un anneau ou un segment d'anneau déplaçable axialement et le canal de flux secondaire (7) étant réalisé avec une symétrie de rotation.

2. Turboréacteur à soufflante selon la revendication n° 1, **caractérisé en ce que** les surfaces de guidage d'air (131) jouxtent l'élément d'obturation (12) se dressant dans le canal de flux secondaire (7) de telle sorte que la laminarité de l'écoulement est augmentée derrière l'élément d'obturation (12).

3. Turboréacteur à soufflante selon la revendication n° 1 ou n° 2, **caractérisé en ce que** les surfaces de guidage d'air (131) dans le canal de flux secondaire (7) jouxtent en aval une arête (122) de l'élément d'obturation (12, 121) se dressant dans le canal de flux secondaire (7).

4. Turboréacteur à soufflante selon une des revendications précédentes, **caractérisé en ce que** l'élément d'obturation (12) est constitué d'un anneau déplaçable axialement ou d'un segment d'anneau déplaçable axialement.

5. Turboréacteur à soufflante selon une des revendications précédentes, **caractérisé en ce que** le dispositif de guidage d'air (13) est constitué d'une pluralité de volets (130) qui sont chacun mobiles par rapport à l'élément d'obturation (12), sachant que chacun des volets (130) constitue une surface de guidage d'air (131).

6. Turboréacteur à soufflante selon la revendication n° 5, **caractérisé en ce que** l'angle d'inclinaison des volets (131) dépend de la position de l'élément d'obturation (12).

7. Turboréacteur à soufflante selon la revendication n° 5 ou n° 6, **caractérisé en ce que** chacun des volets (130) est relié à l'élément d'obturation (12) par le biais d'une articulation (14).

8. Turboréacteur à soufflante selon une des revendications n° 5 à n° 7, **caractérisé en ce qu'**une surface d'obturation (121) de l'élément d'obturation (12) et un volet (130) du dispositif de guidage d'air (13) sont reliés ensemble au moyen d'un élément souple (15) au niveau de leurs arêtes adjacentes (122).

9. Turboréacteur à soufflante selon une des revendications précédentes, **caractérisé en ce que** l'orientation spatiale des surfaces de guidage d'air (131) subit une modification en fonction de la position de l'élément d'obturation (12) de telle sorte que, pour chaque position de l'élément d'obturation (12), l'augmentation de la laminarité de l'écoulement, fournie par les surfaces de guidage d'air (131) est maximale.

10. Turboréacteur à soufflante selon une des revendications n° 1 à n° 4, **caractérisé en ce que** le dispositif de guidage d'air (16) est constitué d'un élément souple, conçu sous forme plane qui forme deux extrémités (161, 162), sachant que ladite une extrémité (161) est reliée à l'élément d'obturation (12) dans une zone marginale de celui-ci et que l'autre extrémité (162) est disposée en aval de manière fixe sur une structure de délimitation (71) du canal de flux secondaire (7).

11. Turboréacteur à soufflante selon une des revendications précédentes, **caractérisé en ce que** les surfaces de guidage d'air (131) du dispositif de guidage d'air (13, 16) sont orientées spatialement de sorte à ce que la largeur du canal de flux secondaire (7) augmente continuellement derrière l'élément d'obturation (12) jusqu'à atteindre une largeur définie.

12. Turboréacteur à soufflante selon une des revendications précédentes, **caractérisé en ce que** l'élément d'obturation (12) prend une position de telle sorte que 30 % à 80 %, notamment 40 % à 70 %, du flux massique évacuable au maximum par soufflage par le canal de flux secondaire (7) s'écoulent à travers ledit canal de flux secondaire (7).

13. Procédé pour évacuer par soufflage l'air de compresseur dans un turboréacteur à soufflante selon une des revendications n° 1 à n° 12, dans lequel l'air de compresseur à évacuer est conduit d'un compresseur (6) du turboréacteur à soufflante dans un canal de flux secondaire (7), sachant que de l'air est évacué par le biais du canal de flux secondaire (7) pendant le fonctionnement du turboréacteur à soufflante en poussant un élément d'obturation déplaçable (12) dans le canal de flux secondaire (7), sachant que celui-ci n'est obturé que partiellement,
**caractérisé en ce**
**que** l'air de compresseur s'écoulant dans le canal de flux secondaire (7) en aval de l'élément d'obturation (12) est guidé le long de surfaces de guidage d'air (131) d'un dispositif de guidage d'air accouplé à l'élément d'obturation (12), pour augmenter la laminarité de l'écoulement, et sachant que l'orientation spatiale des surfaces de guidage d'air (131) est réglée en fonction de la position de l'élément d'obturation (12).
